# FASCICULE DE BREVET EUROPEEN

(11) **EP 3 900 137 B1**
(45) Date de publication et mention de la délivrance du brevet: **19.08.2026**
(21) Numéro de dépôt: 19818157.0
(22) Date de dépôt: 17.12.2019
(51) Int. Cl.: H02H 3/087, H02H 7/12, H02M 1/32, H02M 3/10

(54) **CONVERTISSEUR DE TENSION DC/DC COMPRENANT UN DISPOSITIF DE SÉCURITÉ**
GLEICHSPANNUNGSWANDLER MIT SICHERHEITSVORRICHTUNG
DC/DC VOLTAGE CONVERTER COMPRISING A SAFETY DEVICE

(30) Priorité: 17.12.2018 FR 1873052
(43) Date de publication de la demande: 27.10.2021
(73) Titulaire: Valeo Electrification, 95800 Cergy (FR)
(72) Inventeur: TALON, Emmanuel, 95000 CERGY PONTOISE (FR); DEMARLES, Hervé, 95000 CERGY PONTOISE (FR); PLAIDEAU, Michel, 95000 CERGY PONTOISE (FR)
(74) Mandataire: Valeo Powertrain Systems
(86) Numéro de dépôt international: PCT/EP2019/085738
(87) Numéro de publication internationale: WO 2020/127333

(56) Documents cités:
- EP-A2- 3 048 712
- US-A1- 2017 353 106
- US-B1- 6 275 958
- US-B2- 7 405 495

## Description

La présente invention se rapporte au domaine des convertisseurs électriques notamment des convertisseurs de tension DC/DC utilisés dans le domaine automobile.

Les convertisseurs de tension DC/DC mis en œuvre dans le domaine automobile peuvent, par exemple en cas de défaillance de l'un de leurs composants de puissance implantés sur une carte électronique, créer des courts-circuits générateurs de courant de très forte amplitude, par exemple de plusieurs centaines d'ampères. Ceux-ci peuvent endommager de façon irréversible le convertisseur de tension lui-même mais également les équipements auxquels il est connecté.

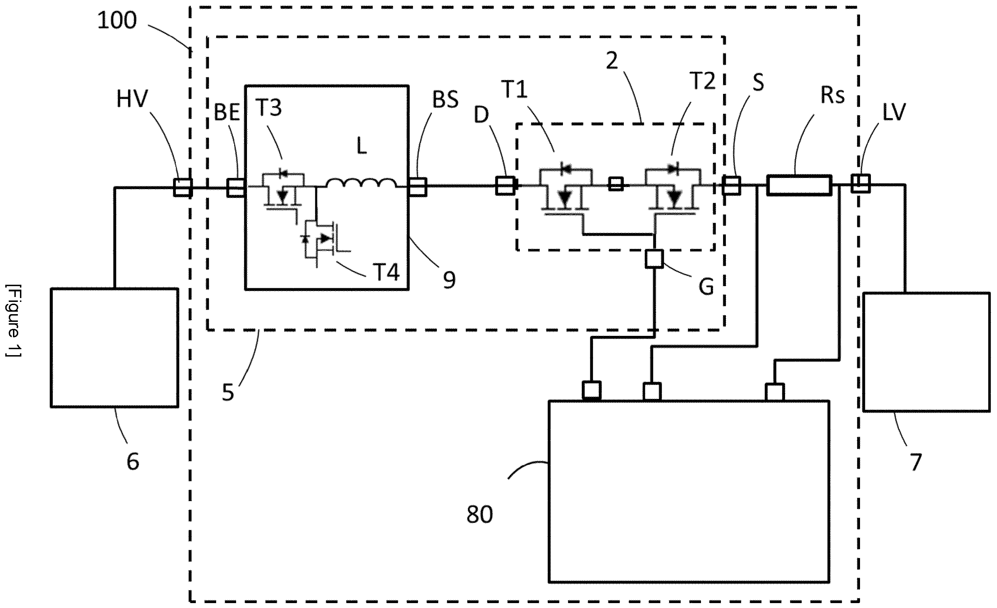

Il convient donc de détecter de tels courants de forte amplitude et le cas échéant de mettre le convertisseur de tension en sécurité. Pour ce faire, il est connu de l'état de la technique un convertisseur de tension DC/DC tel que celui présenté en Figure 1. Un tel convertisseur de tension 100 comporte :
a. Une borne principale d'entrée HV destinée à être connectée à une première source de tension continue 6, par exemple à une batterie 48V
b. Une borne principale de sortie LV destinée à être connectée à une deuxième source de tension continue 7, par exemple à une batterie 12V, ladite deuxième source de tension délivrant une tension inférieure à celle délivrée par ladite première source,
c. Une cellule de conversion de tension 5 ou une pluralité de cellules de conversions disposées en parallèle, chaque cellule comprenant :
   i. un hacheur abaisseur 9 comprenant une borne d'entrée BE et une borne de sortie BS, ladite borne d'entrée dudit hacheur abaisseur étant connectée à ladite borne principale d'entrée,
   ii. un dispositif de sécurité 2 comprenant une borne d'entrée D et une borne de sortie S, ledit dispositif de sécurité comprenant un premier T1 et un deuxième transistor T2, chacun desdits transistors comprenant une borne d'entrée de courant, une borne de sortie de courant et une borne de commande, les bornes d'entrées ou les bornes de sorties des premiers et deuxièmes transistors étant respectivement connectées aux bornes d'entrées et de sorties dudit dispositif de sécurité, la borne d'entrée du dispositif de sécurité étant connectée à la borne de sortie du hacheur abaisseur, la borne de sortie du dispositif de sécurité étant connectée à la borne principale de sortie, ledit dispositif de sécurité comprenant en outre une entrée de commande G destinée à recevoir une commande d'inhibition et étant conçu sur réception de ladite commande d'inhibition pour ouvrir au moins l'un parmi le premier et le deuxième transistor
d. un dispositif de supervision 80 conçu pour envoyer un signal d'inhibition audit dispositif de sécurité lorsque le courant arrivant sur la borne principale de sortie du convertisseur de tension dépasse un seuil.

Le dispositif de supervision du convertisseur DC/DC 100 est en général conçu pour mesurer le courant délivré par la première source d'alimentation 7 au travers d'une résistance Rs de mesure (en anglais « shunt resistor »), placée entre le dispositif de sécurité et la deuxième source de tension continue et pour envoyer un signal d'inhibition audit dispositif de sécurité en cas de court-circuit lorsque la tension aux bornes de la résistance de mesure est supérieure à un seuil.

Ainsi, dans les convertisseurs de tension de l'art antérieur :
a. une résistance de mesure est utilisée pour détecter la présence d'un courant élevé au sein du convertisseur de tension, notamment au niveau de sa borne de sortie lorsque les bornes principales d'entrée et de sortie sont respectivement liées à la première et à la deuxième source de tension, et lorsque un courant élevé est détecté, un dispositif de sécurité est activé pour isoler la borne principale de sortie des autres composants du convertisseur de tension.

Or, l'utilisation d'une résistance de mesure présente comme problème de consommer de la puissance par effet Joule lorsque le convertisseur de tension continue DC/DC fonctionne normalement. Son implantation au sein du convertisseur de tension nécessite par ailleurs une place conséquente sur la carte électronique.

US7405495B2 et EP3048712A2 divulguent un convertisseur DC/DC, chacune comprenant un hacheur et un transistor de protection en série dans le trajet de puissance.

L'invention a pour but de pallier au moins en partie aux problèmes précités.

A cet effet, il est proposé un convertisseur de tension DC/DC du type précité caractérisé en ce que le dispositif de supervision est conçu pour, lorsque pour une cellule de conversion déterminée le premier et le deuxième transistor sont dans leur état passant et la différence de tension entre la borne principale de sortie et la borne d'entrée du dispositif de sécurité est inférieur à un seuil de détection, générer la commande d'inhibition à destination du dispositif de sécurité de la cellule de conversion déterminée.

Ainsi l'utilisation d'une résistance de mesure n'est plus nécessaire, ce qui d'éliminer les pertes Joules liées à la résistance de mesure et de réduire l'encombrement du convertisseur de tension.

Dans un mode particulier de réalisation de l'invention, le dispositif de sécurité est en outre conçu pour, sur réception de ladite commande d'inhibition, ouvrir les premiers et deuxièmes transistors. Ainsi, lorsque les premiers et deuxièmes transistors sont ouverts, les premières et deuxièmes sources de tension sont isolées l'une de l'autre.

Dans un mode particulier de réalisation de l'invention, au moins une cellule de conversion du convertisseur de tension continue comprend une pluralité d'hacheurs abaisseurs en parallèle.

Dans un mode particulier de réalisation de l'invention, le dispositif de supervision est actif seulement lorsque le premier et le deuxième transistor de chaque cellule sont dans leur état passant.

Dans un mode particulier de réalisation de l'invention, le dispositif de supervision est en outre conçu pour générer la commande d'inhibition à destination des dispositifs de sécurité de chaque cellule de conversion.

Dans un mode particulier de réalisation de l'invention, le dispositif de supervision comprend :
a. un étage d'entrée comprenant :
   i. un premier et un deuxième pont diviseur de tension,
   ii. une source de courant ou une source de tension,
   iii. autant de diodes que de cellules de conversion, les anodes des diodes de l'étage d'entrée étant connectée entre elles et reliées à la source de courant ou à la source de tension, chacune des cellules de conversion étant connectée par l'intermédiaire de la borne d'entrée de son dispositif de sécurité à la cathode d'une seule desdites diodes,
   iv. une diode de décalage en tension dont la cathode est connectée à la borne principale de sortie et dont l'anode est connectée à ladite source de tension ou de courant,
   un comparateur de tension dont la borne non inverseuse est connectée par l'intermédiaire du premier pont diviseur de tension aux anodes des diodes de l'étage d'entrée et dont la borne inverseuse est connectée par l'intermédiaire du deuxième pont diviseur de tension à l'anode de la diode de décalage en tension

De façon optionnelle, le convertisseur de tension comprend en outre une troisième résistance connectée entre la sortie et l'entrée non inverseuse dudit comparateur de tension.

De façon optionnelle également, la sortie du comparateur de tension est en outre connectée à la cathode d'une diode de déclenchement, et l'anode de la diode de déclenchement est connectée aux entrées de commande des dispositifs de sécurité des cellules de conversion, chacune desdites entrées de commande des dispositifs de sécurité étant connectée directement ou par le biais d'une résistance à la borne de commande du premier transistor et/ou du deuxième transistor.

On peut également envisager, dans d'autres modes de réalisation, que le convertisseur de tension présente en combinaison tout ou partie des caractéristiques précitées.
La [Figure 1] représente un convertisseur de tension DC/DC selon l'art antérieur.
La [Figure 2] représente un convertisseur de tension DC/DC mettant en œuvre l'invention dans un premier mode de réalisation de l'invention.
La [Figure 3] représente un dispositif de supervision d'un convertisseur de tension DC/DC mettant en œuvre l'invention dans un premier mode de réalisation de l'invention.
La [Figure 4] représente un convertisseur de tension DC/DC mettant en œuvre l'invention selon un deuxième mode de réalisation de l'invention.
La [Figure 5] représente un dispositif de supervision d'un convertisseur de tension DC/DC mettant en œuvre l'invention dans un deuxième mode de réalisation de l'invention.

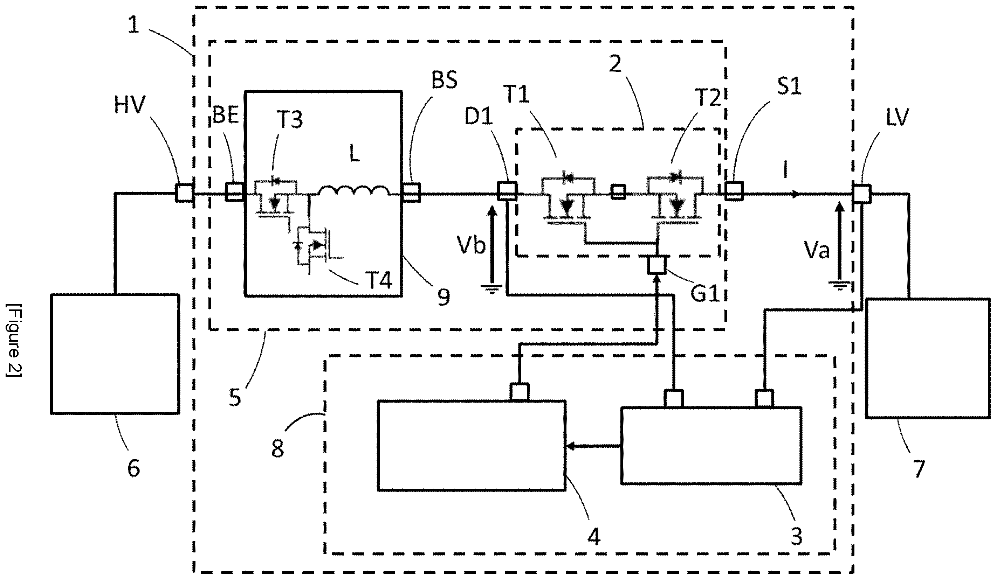

En référence à la [Figure 2], un convertisseur de tension DC/DC 1 mettant en œuvre l'invention va maintenant être décrit. Le convertisseur de tension DC/DC 1 est par exemple utilisé dans un véhicule automobile. Par souci de simplification, des références identiques sont données sur cette figure aux éléments communs du convertisseur de tension selon l'art antérieur représenté à la [Figure 1].

Le convertisseur de tension DC/DC 1 comporte :
a. une borne principale d'entrée HV connectée à une première source de tension continue 6, par exemple une batterie 48V,
b. une borne principale de sortie LV connectée à une deuxième source de tension continue 7, par exemple une batterie 12V, délivrant une tension inférieure à celle de la première source de tension 6
c. une cellule de conversion 5 comprenant :
   i. une borne d'entrée BE connectée à la borne principale d'entrée HV,
   ii. une borne de sortie BS,
   iii. un hacheur abaisseur 9 comprenant une inductance L, un transistor T3 dont le drain est connecté à la borne d'entrée BE et la source à une première extrémité de l'inductance, et un transistor T4 dont le drain est connecté entre la masse et la première extrémité de l'inductance L. L'association de l'inductance L et des deux transistor T3 et T4 réalise un hacheur abaisseur de type « Buck » dont le fonctionnement est bien connu de l'homme du métier,
   iv. un dispositif de sécurité 2 comprenant une borne d'entrée D1 connectée à la deuxième extrémité de l'inductance, une borne de sortie S1 connectée à la borne principale de sortie LV et une borne de commande G1.
   v. un dispositif de supervision 8, et
   vi. un dispositif de pilotage (non représenté sur la [Figure 2]).

Le dispositif de sécurité 2 comprend un premier transistor T1 et un deuxième transistor T2 connectés « tête-bêche ». Dans l'exemple décrit ici, le premier transistor T1 et le deuxième transistor T2 sont des MOSFET dopé N. Le drain du premier transistor T1 est connecté à la borne d'entrée D1 du dispositif de sécurité 2 et le drain du deuxième transistor T2 est connectée à la borne de sortie S1 du dispositif de sécurité 2. Le premier transistor T1 et le deuxième transistor T2 sont connectées par l'intermédiaire de leur source respective de sorte que les diodes intrinsèques de ces transistors soient connectées par leur anode. En d'autres termes, la cathode de la diode intrinsèque du deuxième transistor T2 est connectée à la borne principale de sortie du convertisseur de tension 1 et la cathode du premier transistor T1 est connectée à la borne d'entrée du dispositif de sécurité 2. De cette façon, lorsque le premier transistor T1 et le premier transistor T2 sont ouverts, aucun courant ne peut s'écouler entre la borne d'entrée D1 et la borne de sortie S1 du dispositif de sécurité 2. Les bornes de commande du premier T1 et deuxième transistor T2 sont en outre reliées à la borne de commande G1 du dispositif de sécurité 2. Ainsi, la réception d'une commande d'inhibition sur la borne de commande G1 du dispositif de sécurité 2 permet de déclencher l'ouverture des transistors T1 et T2, et donc d'interrompre toute circulation de courant dans les deux sens entre la borne d'entrée D1 et la borne de sortie S1 du dispositif de sécurité 2.

Le dispositif de pilotage permet de commander à l'ouverture ou à la fermeture les transistors T3 et T4 afin de faire fonctionner le hacheur abaisseur en commutation. En outre, le dispositif de pilotage permet également de commander à l'ouverture ou à la fermeture les transistors T1 et T2 du dispositif de sécurité 2. Pour ce faire le dispositif de pilotage délivre aux bornes de commande des transistors T1, T2, T3 et T4 la tension nécessaire à l'activation respective de ces transistors.

Le dispositif de supervision 8 est en outre conçu pour générer la commande d'inhibition à destination du dispositif de sécurité 2 de la cellule de conversion 5 lorsque le premier T1 et le deuxième transistor T2 sont dans leur état passant et lorsque la différence de tension entre la borne d'entrée D1 du dispositif de sécurité 2 et la borne principale de sortie LV est inférieur à un seuil de détection VSeuil.

Par ailleurs, la tension de seuil Vseuil est égale à la différence de tension Vb-Va qui est égale à la somme des résistances drain source des transistors T1 et T2 dans leur état passant multipliée par le courant traversant ces transistors tel que défini dans l'équation [Math.1].$Vseuil = \left({Rds}_{T 1}+{Rds}_{T 2}\right) . I$

Dans l'exemple décrit ici, la tension de seuil Vs est égale à -0,3V.

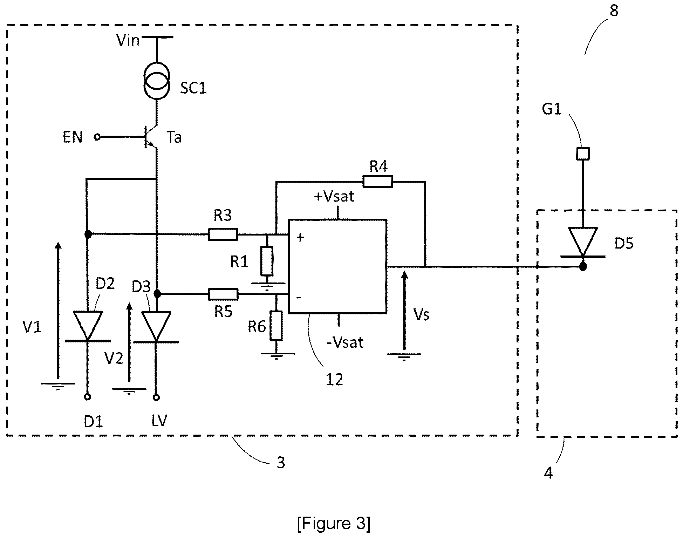

Le dispositif de supervision 8 est représenté sur la [Figure 3] et comprend :
a. un circuit de mesure 3 comprenant:
   i. un comparateur de tension 12 comprenant une borne inverseuse, une borne non inverseuse et une borne de sortie dont le potentiel de sortie VS est positif lorsque la tension présente sur la borne positive inverseuse est supérieure à la tension présente sur la borne non inverseuse du comparateur de tension 12 et dont le potentiel de sortie VS est négatif dans le cas contraire,
   ii. un étage d'entrée comportant une source de courant SC1 alimentée par une tension Vin, la source de courant SC1 est connectée en séries avec un interrupteur d'activation Ta. La source de courant SC1 alimente une première et une deuxième branche électrique. L'interrupteur d'activation Ta possédant une borne de commande connectée par exemple à un microcontrôleur. Ainsi par l'intermédiaire de cet interrupteur d'activation Ta, il est possible d'activer (interrupteur Ta fermé) ou de désactiver (interrupteur Ta ouvert) le dispositif de supervision 8 à partir du microcontrôleur. Ainsi, le dispositif de supervision peut n'être activé que lorsqu'un courant traverse effectivement le dispositif de sécurité 2. Dans la suite de la description, nous supposerons que le dispositif de supervision 8 est activé. La première branche électrique comporte une diode D3 dont la cathode est connectée à la borne principale de sortie LV et la deuxième branche électrique comporte une diode D2 ayant la même tension de seuil que la diode D3 et dont la cathode est connectée à la borne d'entrée D1 du dispositif de sécurité 2.
   iii. Un premier pont diviseur de tension constitué d'une résistance R3 et d'une résistance R1, connectées à la borne non inverseuse du comparateur de tension 12. La résistance R3 étant connectée entre la borne non inverseuse et l'anode de la diode D2, la résistance R1 est connectée entre la borne non inverseuse et la masse électrique.
   iv. Un deuxième pont diviseur de tension d'une résistance R5 et d'une résistance R6 connectées à la borne inverseuse du comparateur de tension 12. La résistance R5 est connectée entre la borne inverseuse du comparateur de tension 12 et l'anode de la diode D3, la résistance R6 est connectée entre la borne inverseuse et la masse électrique. La valeur de la résistance R5 (respectivement de la résistance R6) est égale à la valeur de la résistance R3 (respectivement de la résistance R1).
b. Un circuit de commande 4 comprenant :
   i. une diode D5 dont l'anode est connectée à la borne de commande G1 du dispositif de sécurité, et dont la cathode est connectée à la sortie Vs du comparateur de tension 12.

L'association des résistances R1, R3, R4, R5 et R6 et du comparateur de tension 12 compare les tensions présentes au niveau des anodes des diodes D3 et D2. La tension V2 présente à l'anode de la diode D3 est égale à la tension présente au niveau de la borne principale de sortie décalée de la tension de seuil de la diode D3. La tension V1 présente à l'anode de la diode D2 est égale à la tension présente au niveau de la borne d'entrée du dispositif de sécurité 2 décalée de la tension de seuil de la diode D2. En d'autres termes, aux tensions de seuil près des diodes D3 et D2, le comparateur de tension 12 compare la tension présente au niveau de la borne d'entrée du dispositif de sécurité 2 à la tension présente au niveau de la borne de sortie principale.

En référence à la [Figure 3] et conformément aux équations [Math. 2] et [Math. 3], les tensions de la borne non inverseuse V+ et de la borne inverseuse V- sont exprimées en fonction des tensions V1, V2 et de la tension de sortie Vs du comparateur de tension 12.${V}^{+} = \left(\frac{\frac{R 3 . R 4}{R 3 + R 4}}{R 1 + \frac{R 4 . R 3}{R 4 + R 3}}\right) . V 1 + \left(\frac{\frac{R 1 . R 3}{R 1 + R 3}}{R 4 + \frac{R 1 . R 3}{R 1 + R 3}}\right) . Vs$

En considérant que la résistance R3 est égale à la résistance R5, et que la résistance R1 est égale à la résistance R6.${V}^{-} = \left(\frac{R 5}{R 5 + R 6}\right) . V 2 = \left(\frac{R 3}{R 1 + R 3}\right) . V 2$

Conformément à l'équation [Math. 2] lorsqu'on choisit la résistance R4 largement supérieur à la résistance R3, par exemple dix fois supérieur, l'équation [Math. 2] est équivalente à l'équation [Math. 4].${V}^{+} = \left(\frac{R 3}{R 1 + R 3}\right) . V 1 + \left(\frac{\frac{R 1 . R 3}{R 1 + R 3}}{R 4 + \frac{R 1 . R 3}{R 1 + R 3}}\right) . Vs$

La tension de sortie du comparateur de tension 12 bascule de +Vsat à -Vsat, lorsque la tension V+ devient inférieure à la tension V-. En d'autres termes, le basculement intervient lorsque la condition de l'équation [Math. 5] est vérifiée${V}^{+} - {V}^{-} = \left(V1-V2\right) \left(\frac{R 3}{R 1 + R 3}\right) + \left(\frac{\frac{R 1 . R 3}{R 1 + R 3}}{R 4 + \frac{R 1 . R 3}{R 1 + R 3}}\right) . Vs < 0$

Conformément à l'équation [Math. 5], lorsque la tension V1-V2 devient inférieure à un seuil de basculement SB (donné par l'équation [Math. 6]), la tension de sortie VS du comparateur de tension passe de sa valeur de saturation positive +Vsat à sa valeur de saturation négative -Vsat.$V 1 - V 2 < - \left(\frac{R 1}{R 4 + \frac{R 1 . R 3}{R 1 + R 3}}\right) . Vs = SB$

En choisissant convenablement les valeurs des résistances R1, R3, R4, R5 (égale à R3) et R6 (égale à R1) en fonction de la tension de saturation Vsat on obtient un seuil de basculement SB égal à la tension Vseuil.

Ainsi, lorsque la tension V1-V2 est inférieure à la tension Vseuil, la tension de sortie du comparateur de tension 12 passe à sa valeur de saturation négative - Vsat.

Ainsi, lors d'un disfonctionnement du convertisseur DC/DC 1 par exemple lorsque le transistor T4 est en court-circuit, le courant traversant les deux transistors T1 et T2 augmente jusqu'à faire apparaître une baisse de potentiel au niveau de la borne d'entrée du dispositif de sécurité, ladite baisse de potentiel étant détectée par la bascule du comparateur de tension 12.

Lorsque la tension Vs est égale à la valeur de saturation négative -Vsat, le potentiel -Vsat est appliqué sur la borne de commande G1.

Lorsque la tension Vs est égale à la tension négative -Vsat la diode D5 permet de d'annuler/court-circuiter la tension fournie par le dispositif de pilotage sur le borne de commande des interrupteurs T1 et T2 l'ouverture de ceux-ci.

En d'autres termes, lorsque la tension de sortie Vs est égale à la valeur de saturation négative -Vsat, le dispositif de sécurité 2 reçoit une commande d'inhibition sur sa borne de commande G1.

Dans une variante du premier mode de réalisation, le convertisseur DC/DC 1 possède une pluralité d'hacheur abaisseur 9, chacun d'entre eux possédant une borne d'entrée BE et une borne de sortie BS, la pluralité d'hacheurs abaisseurs étant connectés en parallèle, les bornes BE étant reliées entre elles et les bornes BS étant reliées entre elles. La pluralité d'hacheurs abaisseurs est connectée en parallèle de façon à convertir un courant plus important.

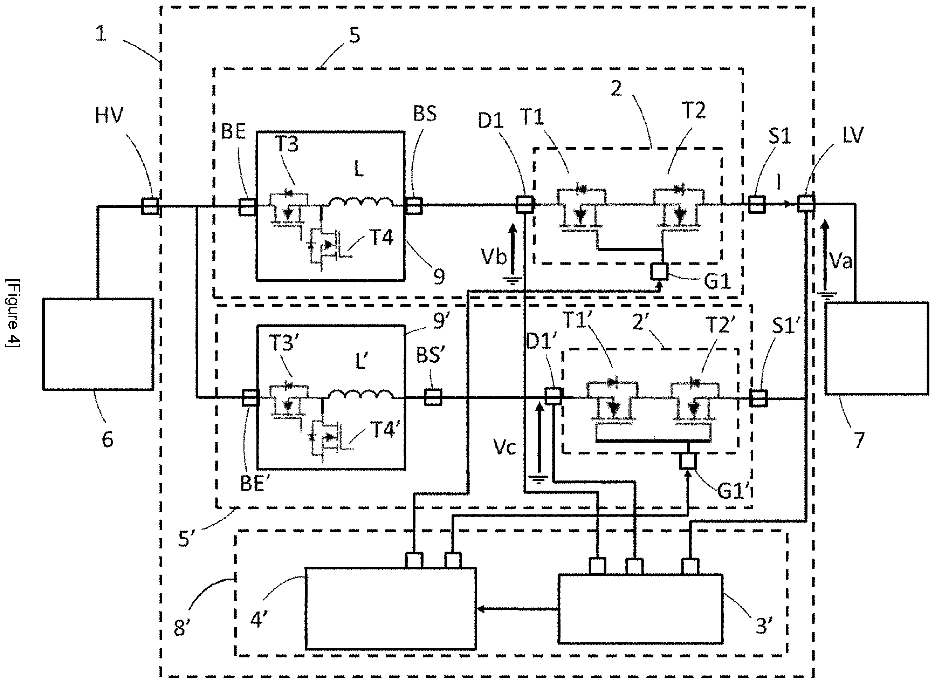

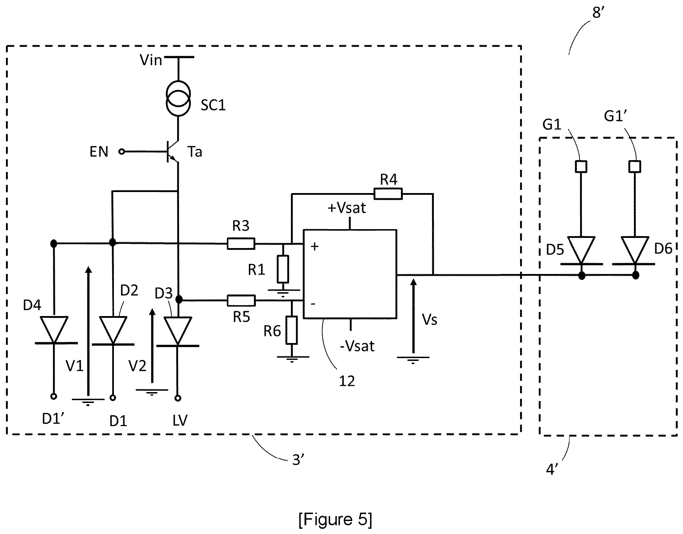

En référence aux figures 4 et 5, un deuxième mode de réalisation de l'invention va être maintenant décrit. Les éléments identiques au premier mode de réalisation de la [Figure 2] et de la [Figure 3] gardent les mêmes références et ne seront pas décrits à nouveau.

Dans ce deuxième mode de réalisation, le convertisseur de tension DC/DC 1' représenté à la [Figure 4] comporte une deuxième cellule de conversion 5' connectée en parallèle de la première cellule de conversion 5.

La cellule de conversion 5' comprend :
a. une borne d'entrée BE' connectée à la borne principale d'entrée HV,
b. un hacheur abaisseur 9' comprenant une inductance L', un transistor T3' dont le drain est connecté à la borne d'entrée BE' et la source à une première extrémité de l'inductance, et un transistor T4' dont le drain est connecté entre la masse et la première extrémité de l'inductance L'. L'association de l'inductance L' et des deux transistors T3' et T4' réalise un hacheur abaisseur de type « Buck » dont le fonctionnement est bien connu de l'homme du métier,
c. un dispositif de sécurité 2' comprenant une borne d'entrée D1' connectée à la deuxième extrémité de l'inductance, une borne de sortie S1' connectée à la borne principale de sortie LV et une borne de commande G1'.

Le convertisseur de tension DC/DC 1' comprend également un dispositif de supervision 8' et un dispositif de pilotage (non représenté) des transistors du convertisseur de tension DC/DC 1'.

Le dispositif de sécurité 2' comprend un premier transistor T1' et une deuxième transistor T2' connectés « tête-bêche ». Dans l'exemple décrit ici, le premier transistor T1' et le deuxième transistor T2' sont des MOSFET dopé N. Le drain du premier transistor T1' est connecté à la borne d'entrée du dispositif de sécurité 2' et le drain du deuxième transistor T2' est connectée à la borne de sortie du dispositif de sécurité 2. Le premier transistor T1' et le deuxième transistor T2' sont connectées par l'intermédiaire de leur source respective de sorte que les diodes intrinsèques de ces transistors soient connectées par leur anode. En d'autres termes, la cathode de la diode intrinsèque du deuxième transistor T2' est connectée à la borne principale de sortie du convertisseur de tension 1' et la cathode du premier transistor T1' est connectée à la borne d'entrée du dispositif de sécurité 2'. De cette façon, lorsque le premier transistor T1' et le premier transistor T2' sont ouverts, aucun courant ne peut s'écouler entre la borne d'entrée D1' et la borne de sortie S1' du dispositif de sécurité 2'. Les bornes de commande du premier T1' et deuxième transistor T2' sont en outre reliées à la borne de commande G1' du dispositif de sécurité 2'. Ainsi, la réception d'une commande d'inhibition sur la borne de commande G1' du dispositif de sécurité 2 permet de déclencher l'ouverture des transistors T1' et T2'.

Le dispositif de supervision 8' est représenté à la [Figure 5] et comprend un circuit de mesure 3' et un circuit de commande 4'. Il est en outre conçu pour générer une commande d'inhibition à destination du dispositif de sécurité 2' et à destination du dispositif de sécurité 2 lorsque les premiers T1, T1' et deuxième T2, T2' transistors sont dans leur état passant et lorsque l'une parmi la différence de tension entre la borne d'entrée D1' du dispositif de sécurité 2' et la borne principale de sortie LV et la différence de tension entre la borne d'entrée D1 du dispositif de sécurité 2 et la borne principale de sortie LV est inférieure au seuil de détection Vseuil.

Dans ce deuxième mode de réalisation, le dispositif de supervision 8' se distingue du dispositif de supervision 8 en ce que :
a. Le circuit de mesure 3' comprend en outre une troisième branche électrique comportant une diode D4 dont la cathode est connectée à la borne d'entrée D1' du dispositif de sécurité 2' et l'anode de la diode D4 est connectée à l'anode de la diode D2. En d'autres termes, les diodes D2 et D4 réalise un ET à diode. En outre, les tensions de seuil des diodes D2 et D4 sont identiques,
b. Le circuit de commande 4' comprend en outre une diode D6 dont l'anode est connectée à la borne de commande du dispositif de sécurité 2', et sa cathode est connectée à la borne de sortie Vs du comparateur de tension 12.

La tension V1 présente à l'anode de la diode D2 et de la diode D4 est égale à la plus petite des tensions présente au niveau des bornes d'entrée D1 et D1' décalée de la tension de seuil des diodes D2 et D4. La tension V2 présente à l'anode de la diode D3 est égale à la tension présente au niveau de la borne principale de sortie décalée de la tension de seuil de la diode D3. En d'autres termes, aux tensions de seuil près des diodes D3, D4 et D2, le comparateur de tension 12 compare la plus petite des tensions présentes au niveau de la borne d'entrée D1 et de la borne d'entrée D1' à la tension présente au niveau de la borne de sortie principale.

Ainsi, conformément à l'équations [Math. 6], lorsque la tension V1-V2 devient inférieure au seuil de basculement SB, la tension de sortie VS du comparateur de tension passe de sa valeur de saturation positive +Vsat à sa valeur de saturation négative -Vsat.

Lorsque la tension Vs est égale à la tension négative -Vsat la diode D5 permet de d'annuler/court-circuiter la tension fournie par le dispositif de pilotage sur le borne de commande des interrupteurs T1 et T2 l'ouverture de ceux-ci. De même, lorsque la tension Vs est égale à la tension négative -Vsat la diode D6 permet de d'annuler/court-circuiter la tension fournie par le dispositif de pilotage sur le borne de commande des interrupteurs T1' et T2' et l'ouverture de ceux-ci.

En d'autres termes, lorsque la tension V1-V2 devient inférieure au seuil de basculement SB, la tension de sortie Vs est égale à -Vsat ce qui provoque l'ouverture des transistors T1, T1', T2 et T2'.

**Ainsi,** lors d'un disfonctionnement du convertisseur DC/DC 1' par exemple lorsque le transistor T4' est en court-circuit, le courant traversant les deux transistors T1' et T2' augmente jusqu'à faire apparaître une baisse de potentiel au niveau de la borne d'entrée du dispositif de sécurité 2', ladite baisse de potentiel étant détectée par la bascule du comparateur de tension 12, cette bascule entrainant l'ouverture des transistors T1, T1', T2 et T2'.des dispositifs de sécurité 2 et 2' et la mise en sécurité du convertisseur de tension DC/DC 1'.

Par ailleurs et de façon optionnelle, le dispositif de pilotage peut scruter la tension au niveau de la borne de sortie du comparateur 12 et lorsque cette tension est égale à -Vsat, le dispositif de pilotage ouvre les interrupteurs T3, T3', T4 et T4' plaçant ainsi le convertisseur de tension DC/DC 1' dans un état complètement sécurisé.

## Revendications

1. Convertisseur DC/DC comprenant :
a. une borne principale d'entrée (HV) destinée à être connectée à une première source de tension continue (6)
b. une borne principale de sortie (LV) destinée à être connectée à une deuxième source de tension continue (7), ladite deuxième source de tension (7) délivrant une tension inférieure à celle délivrée par ladite première source (6),
c. une cellule de conversion (5) ou une pluralité de cellules de conversions (5, 5') disposées en parallèle, chaque cellule (5) comprenant :
i. un hacheur abaisseur (9) comprenant une borne d'entrée (BE) et une borne de sortie (BS), ladite borne d'entrée dudit hacheur abaisseur (9) étant connectée à ladite borne principale d'entrée,
ii. un dispositif de sécurité (2) comprenant une borne d'entrée (D1) et une borne de sortie (S1), ledit dispositif de sécurité (2) comprenant un premier (T1) et un deuxième (T2) transistor, chacun desdits transistors (T1, T2) comprenant une borne d'entrée de courant, une borne de sortie de courant et une borne de commande (G), les bornes d'entrée et les bornes de sortie des premier (T1) et deuxième (T2) transistor étant respectivement connectées aux bornes d'entrée (D1) et de sortie (S1) dudit dispositif de sécurité (2), la borne d'entrée (D1) du dispositif de sécurité (2) étant connectée à la borne de sortie (BS) du hacheur abaisseur (9), la borne de sortie (S1) du dispositif de sécurité (2) étant connectée à la borne principale de sortie (LV), ledit dispositif de sécurité (2) comprenant en outre une entrée de commande (G1) destinée à recevoir une commande d'inhibition et étant conçu sur réception de ladite commande d'inhibition pour ouvrir au moins l'un parmi le premier (T1) et le deuxième (T2) transistor;
ledit convertisseur DC/DC étant **caractérisé en ce qu'**il comprend en outre un dispositif de supervision (8) conçu pour, lorsque pour une cellule de conversion (5) déterminée le premier (T1) et le deuxième (T2) transistor sont dans leur état passant et la différence de tension entre la borne principale de sortie (LV) et la borne d'entrée (D1) du dispositif de sécurité (2) est inférieure à un seuil de détection, générer la commande d'inhibition à destination du dispositif de sécurité (2) de la cellule de conversion (5) déterminée.

2. Convertisseur DC/DC selon la revendication 1 dans lequel au moins une cellule de conversion (5) comprend une pluralité d'hacheurs abaisseurs en parallèle.

3. Convertisseur DC/DC selon l'une des revendications précédentes dans lequel le dispositif de supervision (8) est actif seulement lorsque le premier (T1) et le deuxième (T2) transistor de chaque cellule sont dans leur état passant.

4. Convertisseur DC/DC selon l'une des revendications précédentes dans lequel le dispositif de supervision (8) est en outre conçu pour générer la commande d'inhibition à destination des dispositifs de sécurité (2, 2') de chaque cellule de conversion (5, 5').

5. Convertisseur DC/DC selon l'une des revendications précédentes dans lequel le dispositif de supervision (8) comprend :
a. un étage d'entrée comprenant :
i. un premier et un deuxième pont diviseur de tension,
ii. une source de courant ou une source de tension,
iii. autant de diodes (D2, D4) que de cellules de conversion (5, 5'), les anodes des diodes de l'étage d'entrée étant connectée entre elles et reliées à la source de courant ou à la source de tension, chacune des cellules de conversion (5, 5') étant connectée par l'intermédiaire de la borne d'entrée (D1, D1') de son dispositif de sécurité (2, 2') à la cathode d'une seule desdites diodes (D2, D4),
iv. une diode de décalage (D3) en tension dont la cathode est connectée à la borne principale de sortie (LV) et dont l'anode est connectée à ladite source de tension ou de courant,
b. un comparateur de tension (12) dont la borne non inverseuse est connectée par l'intermédiaire du premier pont diviseur de tension aux anodes des diodes (D2, D4) de l'étage d'entrée et dont la borne inverseuse est connectée par l'intermédiaire du deuxième pont diviseur de tension à l'anode de la diode de décalage (D3) en tension.

6. Convertisseur DC/DC selon la revendication précédente comprenant en outre une troisième résistance (R4) connectée entre la sortie et l'entrée non inverseuse dudit comparateur de tension.

7. Convertisseur DC/DC selon la revendication 5 ou 6 dans lequel ladite sortie du comparateur de tension est en outre connectée à la cathode d'une diode de déclenchement (D5, D6), et l'anode de la diode de déclenchement est connectée aux entrées de commande (G1, G1') des dispositifs de sécurité (2, 2') des cellules de conversion (5, 5') , chacune desdites entrées de commande (G1, G1') des dispositifs de sécurité (2, 2') étant connectée directement ou par le biais d'une résistance à la borne de commande (G) du premier transistor (T1) et/ou du deuxième transistor (T2).

## Patentansprüche

1. DC/DC-Wandler, umfassend:
a. einen Haupteingangsanschluss (HV) zum Anschluss an eine erste Gleichspannungsquelle (6)
b. einen Hauptausgang (LV) zum Anschluss an eine zweite Gleichspannungsquelle (7), wobei die zweite Spannungsquelle (7) eine Spannung liefert, die niedriger ist als die von der ersten Quelle (6) gelieferte Spannung,
c. eine Umwandlungszelle (5) oder mehrere parallel geschaltete Umwandlungszellen (5, 5'), wobei jede Zelle (5) umfasst:
i. einen Abwärts-Chopper (9) mit einem Eingangsanschluss (BE) und einem Ausgangsanschluss (BS), wobei der Eingangsanschluss des Abwärts-Choppers (9) mit dem Haupteingangsanschluss verbunden ist,
ii. eine Sicherheitsvorrichtung (2) mit einem Eingangsanschluss (D1) und einem Ausgangsanschluss (S1), wobei die Sicherheitsvorrichtung (2) einen ersten (T1) und einen zweiten (T2) Transistor umfasst, wobei jeder der Transistoren (T1, T2) einen Stromeingangsanschluss, einen Stromausgangsanschluss und einen Steueranschluss (G) aufweist, wobei die Eingangs- und Ausgangsanschlüsse des ersten (T1) und des zweiten (T2) Transistors jeweils mit dem Eingangsanschluss (D1) und dem Ausgangsanschluss (S1) der Sicherheitsvorrichtung (2) verbunden sind, wobei der Eingangsanschluss (D1) der Sicherheitsvorrichtung (2) mit dem Ausgangsanschluss (BS) des Abwärts-Choppers (9) verbunden ist und der Ausgangsanschluss (S1) der Sicherheitsvorrichtung (2) mit dem Hauptausgangsanschluss (LV) verbunden ist, wobei die Sicherheitsvorrichtung (2) ferner einen Steuereingang (G1) zum Empfangen eines Sperrbefehls umfasst und so ausgelegt ist, dass sie bei Empfang des Sperrbefehls mindestens einen der ersten (T1) und zweiten (T1) Transistoren öffnet;
wobei der DC/DC-Wandler **dadurch gekennzeichnet ist, dass** er ferner eine Überwachungseinrichtung (8) umfasst, die so ausgelegt ist, dass sie, wenn für eine bestimmte Wandlerzelle (5) der erste (T1) und der zweite (T2) Transistor im Durchlasszustand sind und die Spannungsdifferenz zwischen dem Hauptausgangsanschluss (LV) und dem Eingangsanschluss (D1) der Sicherheitsvorrichtung (2) kleiner als ein Erkennungsschwellenwert ist, den Sperrbefehl für die Steuervorrichtung (2) der betreffenden Umwandlungszelle (5) zu erzeugen.

2. DC/DC-Wandler nach Anspruch 1, wobei mindestens eine Wandlerzelle (5) eine Vielzahl von parallel geschalteten Abwärts-Choppern umfasst.

3. DC/DC-Wandler nach einem der vorstehenden Ansprüche, wobei die Überwachungseinrichtung (8) nur dann aktiv ist, wenn sich der erste (T1) und der zweite (T2) Transistor jeder Zelle im Durchlasszustand befinden.

4. DC/DC-Wandler gemäß einem der vorstehenden Ansprüche, wobei die Überwachungseinrichtung (8) ferner dazu ausgelegt ist, den Sperrbefehl für die Sicherheitseinrichtungen (2, 2') jeder Wandlerzelle (5, 5') zu erzeugen.

5. DC/DC-Wandler nach einem der vorstehenden Ansprüche, wobei die Überwachungseinrichtung (8) umfasst:
a. eine Eingangsstufe, die umfasst:
i. eine erste und eine zweite Spannungsteilerbrücke,
ii. eine Stromquelle oder eine Spannungsquelle,
iii. ebenso viele Dioden (D2, D4) wie Wandlerzellen (5, 5'),
wobei die Anoden der Dioden der Eingangsstufe miteinander verbunden und an die Stromquelle oder die Spannungsquelle angeschlossen sind, wobei jede der Umwandlungszellen (5, 5') über den Eingangsanschluss (D1, D1') ihrer Sicherheitsvorrichtung (2, 2') mit der Kathode einer einzigen der genannten Dioden (D2, D4) verbunden ist,
iv. eine Spannungsversatzdiode (D3), deren Kathode mit dem Hauptausgangsanschluss (LV) verbunden ist und deren Anode mit der genannten Spannungs- oder Stromquelle verbunden ist,
b. einen Spannungskomparator (12), dessen nichtinvertierender Anschluss über die erste Spannungsteilerbrücke mit den Anoden der Dioden (D2, D4) der Eingangsstufe verbunden ist und dessen invertierender Anschluss über die zweite Spannungsteilerbrücke mit der Anode der Spannungsversatzdiode (D3) verbunden ist.

6. DC/DC-Wandler nach dem vorstehenden Anspruch, der ferner einen dritten Widerstand (R4) umfasst, der zwischen dem Ausgang und dem nichtinvertierenden Eingang des genannten Spannungskomparators geschaltet ist.

7. DC/DC-Wandler nach Anspruch 5 oder 6, bei dem der Ausgang des Spannungskomparators ferner mit der Kathode einer Auslösediode (D5, D6) verbunden ist und die Anode der Auslösediode mit den Steuereingängen (G1, G1') der Sicherheitsvorrichtungen (2, 2') der Umwandlungszellen (5, 5') verbunden ist, wobei jeder der genannten Steuereingänge (G1, G1') der Sicherheitsvorrichtungen (2, 2') direkt oder über einen Widerstand mit dem Steueranschluss (G) des ersten Transistors (T1) und/oder des zweiten Transistors (T2) verbunden ist.

## Claims

1. A DC/DC converter comprising:
a. a main input terminal (HV) designed to be connected to a first DC voltage source (6)
b. a main output terminal (LV) intended to be connected to a second DC voltage source (7), said second voltage source (7) supplying a voltage lower than that supplied by said first source (6),
c. a conversion cell (5) or a plurality of conversion cells (5, 5') arranged in parallel, each cell (5) comprising:
i. a step-down chopper (9) comprising an input terminal (BE) and an output terminal (BS), said input terminal of said step-down chopper (9) being connected to said main input terminal,
ii. a safety device (2) comprising an input terminal (D1) and an output terminal (S1), said safety device (2) comprising a first (T1) and a second (T2) transistor, each of said transistors (T1, T2) comprising a current input terminal, a current output terminal and a control terminal (G), the input terminals and output terminals of the first (T1) and second (T2) transistors being connected respectively to the input (D1) and output (S1) terminals of said safety device (2), the input terminal (D1) of the safety device (2) being connected to the output terminal (BS) of the step-down chopper (9), the output terminal (S1) of the safety device (2) being connected to the main output terminal (LV), said safety device (2) further comprising a control input (G1) for receiving an inhibit command and being configured, upon receipt of said inhibit command, to turn off at least one of the first (T1) and second (T1) transistors;
said DC/DC converter being **characterised in that** it further comprises a monitoring device (8) designed so that, when, for a given conversion cell (5), the first (T1) and second (T2) transistors are in their on-state and the voltage difference between the main output terminal (LV) and the input terminal (D1) of the safety device (2) is less than a detection threshold, to generate the inhibit command intended for the control device (2) of the specific conversion cell (5).

2. A DC/DC converter according to claim 1, in which at least one conversion cell (5) comprises a plurality of step-down choppers in parallel.

3. A DC/DC converter according to one of the preceding claims, in which the monitoring device (8) is active only when the first (T1) and second (T2) transistors of each cell are in their on-state.

4. A DC/DC converter according to one of the preceding claims, in which the monitoring device (8) is further designed to generate the inhibit signal intended for the safety devices (2, 2') of each conversion cell (5, 5').

5. A DC/DC converter according to one of the preceding claims, in which the monitoring device (8) comprises:
a. an input stage comprising:
i. a first and a second voltage divider bridge,
ii. a current source or a voltage source,
iii. as many diodes (D2, D4) as there are conversion cells (5, 5'), the anodes of the diodes in the input stage being connected to one another and to the current source or voltage source, each of the conversion cells (5, 5') being connected via the input terminal (D1, D1') of its safety device (2, 2') to the cathode of only one of the said diodes (D2, D4),
iv. a voltage-shifting diode (D3) whose cathode is connected to the main output terminal (LV) and whose anode is connected to the said voltage or current source,
b. a voltage comparator (12) whose non-inverting input is connected via the first voltage divider bridge to the anodes of the diodes (D2, D4) of the input stage and whose inverting input is connected via the second voltage divider bridge to the anode of the voltage-shifting diode (D3).

6. A DC/DC converter according to the preceding claim, further comprising a third resistor (R4) connected between the output and the non-inverting input of said voltage comparator.

7. A DC/DC converter according to claim 5 or 6, in which said output of the voltage comparator is further connected to the cathode of a trigger diode (D5, D6), and the anode of the trigger diode is connected to the control inputs (G1, G1') of the safety devices (2, 2') of the conversion cells (5, 5'), each of said control inputs (G1, G1') of the safety devices (2, 2') being connected directly or via a resistor to the control terminal (G) of the first transistor (T1) and/or the second transistor (T2).
